# EUROPEAN PATENT APPLICATION

(11) **EP 3 401 887 A1**
(43) Date of publication of application: **14.11.2018**
(21) Application number: 18166436.8
(22) Date of filing: 05.06.2015
(51) Int. Cl.: G08B 13/24

(54) **ACOUSTIC-MAGNETOMECHANICAL MARKER HAVING AN ENHANCED SIGNAL AMPLITUDE AND THE MANUFACTURE THEREOF**

(30) Priority: 09.06.2014 US 201462009438 P; 16.09.2014 US 201414487277
(62) Divisional of application: 15744723.6
(71) Applicant: Tyco Fire & Security GmbH, 8212 Neuhausen am Rheinfall (CH)
(72) Inventor: LIU, Nen-Chin, Boca Raton, FL Florida 33487 (US)
(74) Representative: Hafner & Kohl

(57) **Abstract**

Systems **(100)** and methods **(600)** for making a marker. The methods comprise: obtaining a resonator material which has been annealed under a tensile force selected to provide a maximum resonant amplitude at a bias field Hₘₐₓ in the marker; and providing with the bias material of the marker an operating bias field H_{operating} with a value less than a value of said bias field Hₘₐₓ. The value of H_{operating} is reduced by performing at least one of the following operations: selectively modifying a geometry of a bias material which is to be disposed in a housing of the marker; selectively modifying a spacing between the resonator material and the bias material arranged in a stacked configuration; and partially de-gaussing the bias material subsequent to being fully saturated.

## Description

### FIELD OF THE INVENTION

This document relates generally to Electronic Article Surveillance ("EAS") systems. More particularly, this document relates to EAS systems employing an Acoustic-MagnetoMechanical ("AMM") marker and methods of making such an AMM marker.

### BACKGROUND OF THE INVENTION

A typical EAS system in a retail setting may comprise a monitoring system and at least one security tag or marker attached to an article to be protected from unauthorized removal. The monitoring system establishes a surveillance zone in which the presence of security tags and/or markers can be detected. The surveillance zone is usually established at an access point for the controlled area (e.g., adjacent to a retail store entrance and/or exit). If an article enters the surveillance zone with an active security tag and/or marker, then an alarm may be triggered to indicate possible unauthorized removal thereof from the controlled area. In contrast, if an article is authorized for removal from the controlled area, then the security tag and/or marker thereof can be deactivated and/or detached therefrom. Consequently, the article can be carried through the surveillance zone without being detected by the monitoring system and/or without triggering the alarm.

The security tag or marker generally consists of a housing. The housing is made of a low cost plastic material, such as polystyrene. The housing is typically manufactured with a drawn cavity in the form of a rectangle. This type of housing works reasonably well, but suffers from bowing and warping that result from the drawing process introducing stresses into the plastic. In addition, the cavity crushes under stress of application or bending. An improved design was created a few years ago that added fingers or wavy ends to the label. This improvement reduces issues, but does not completely eliminate the crushing and bending issues.

A bias magnet is disposed within the housing adjacent to a magnetoelastic resonator. The bias magnet is made of a semi-hard magnetic material. The resonator is made of a soft magnetic material in the form of an elongate thin ribbon produced by rapid quenching. During operation, the security tag or marker produces a resonate signal with a particular amplitude that is detectable by the monitoring system. The resonator signal's amplitude has been conventionally enhanced by increasing a width of the resonator, whereby the production cost and complexity of the resonator is undesirably increased.

### SUMMARY OF THE INVENTION

The present invention concerns implementing systems and methods for making a marker. The marker may include, but is not limited to, an EAS label attachable to an article to be protected from unauthorized removal from a particular area. The methods involve: obtaining a resonator material which has been annealed under a tensile force selected to provide a maximum resonant amplitude at a bias field Hₘₐₓ; and providing by the bias material in the marker an operating bias field H_{operating} with a value less than a value of the bias field Hₘₐₓ. The value of the bias field H_{operating} is reduced by performing at least one of the following operations: selectively modifying a geometry of a bias material which is to be disposed in a housing of the marker; selectively modifying a spacing between the resonator material and the bias material arranged in a stacked configuration; and partially de-gaussing the bias material subsequent to being fully saturated.

In some scenarios, the geometry of the bias material is selectively modified by changing a width and/or a thickness of the bias material which has a generally rectangular shape. The spacing is selectively modified by disposing a spacer between the resonator material and the bias material arranged in the stacked configuration. The bias material is partially de-gaussed through an application of a reverse direct magnetic field to the marker. Notably, a signal amplitude of the marker is increased by an amount equal to or greater than half an original signal amplitude value as a result of reducing the value of the operating bias field H_{operating}. Also, a magnetic clamping of the resonator material by the bias material is decreased as a result of reducing the value of the operating bias field H_{operating}.

### DESCRIPTION OF THE DRAWINGS

Embodiments will be described with reference to the following drawing figures, in which like numerals represent like items throughout the figures, and in which:
FIG. 1 is a perspective view of an exemplary EAS system that is useful for understanding the present invention.
FIG. 2 is a graph showing bias sweep curves for two samples of resonator material which have the same chemical composition, but which were annealed at different conditions.
FIG. 3 is top view of the resonator shown in FIG. 1.
FIG. 4 is a side view of the resonator shown in FIG. 1.
FIG. 5 is a partial cross-section of the marker shown in FIG. 1.
FIG. 6 is flow diagram of a method for reducing an operating bias field strength that is useful for understanding the present invention.
FIGS. 7-17 each provide a schematic illustration of an exemplary architecture for a marker's housing.
FIG. 18 is a flow diagram of an exemplary method for making a marker housing.

### DETAILED DESCRIPTION OF THE INVENTION

It will be readily understood that the components of the embodiments as generally described herein and illustrated in the appended figures could be arranged and designed in a wide variety of different configurations. Thus, the following more detailed description of various embodiments, as represented in the figures, is not intended to limit the scope of the present disclosure, but is merely representative of various embodiments. While the various aspects of the embodiments are presented in drawings, the drawings are not necessarily drawn to scale unless specifically indicated.

The present invention may be embodied in other specific forms without departing from its spirit or essential characteristics. The described embodiments are to be considered in all respects only as illustrative and not restrictive. The scope of the invention is, therefore, indicated by the appended claims rather than by this detailed description. All changes which come within the meaning and range of equivalency of the claims are to be embraced within their scope.

Reference throughout this specification to features, advantages, or similar language does not imply that all of the features and advantages that may be realized with the present invention should be or are in any single embodiment of the invention. Rather, language referring to the features and advantages is understood to mean that a specific feature, advantage, or characteristic described in connection with an embodiment is included in at least one embodiment of the present invention. Thus, discussions of the features and advantages, and similar language, throughout the specification may, but do not necessarily, refer to the same embodiment.

Furthermore, the described features, advantages and characteristics of the invention may be combined in any suitable manner in one or more embodiments. One skilled in the relevant art will recognize, in light of the description herein, that the invention can be practiced without one or more of the specific features or advantages of a particular embodiment. In other instances, additional features and advantages may be recognized in certain embodiments that may not be present in all embodiments of the invention.

Reference throughout this specification to "one embodiment", "an embodiment", or similar language means that a particular feature, structure, or characteristic described in connection with the indicated embodiment is included in at least one embodiment of the present invention. Thus, the phrases "in one embodiment", "in an embodiment", and similar language throughout this specification may, but do not necessarily, all refer to the same embodiment.

As used in this document, the singular form "a", "an", and "the" include plural references unless the context clearly dictates otherwise. Unless defined otherwise, all technical and scientific terms used herein have the same meanings as commonly understood by one of ordinary skill in the art. As used in this document, the term "comprising" means "including, but not limited to".

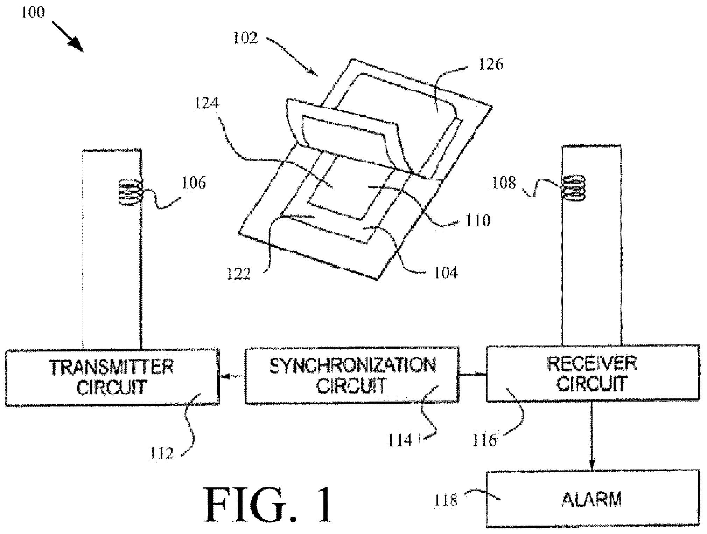

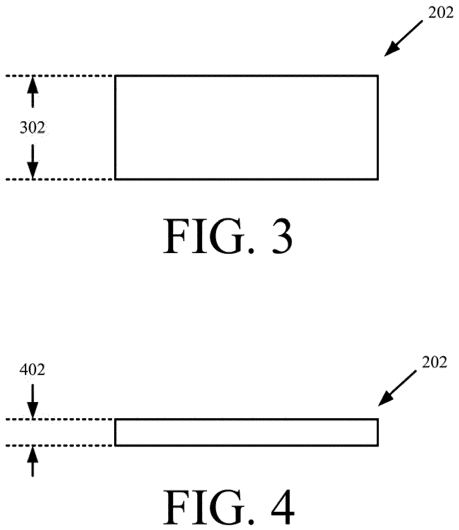

Embodiments of the present invention will now be described with respect to FIGS. 1-6. The present invention generally relates to novel systems and methods for making a marker. The marker may include, but is not limited to, an EAS label attachable to an article to be protected from unauthorized removal from a particular area. The methods involve: obtaining a resonator material which has been annealed under a tensile force selected to provide a maximum resonant amplitude at a bias field Hₘₐₓ; and providing with the bias material of the marker an operating bias field H_{operating} with a value less than a value of the bias field Hₘₐₓ. The value of H_{operating} is reduced by performing at least one of the following operations: selectively modifying a geometry of a bias material which is to be disposed in a housing of the marker; selectively modifying a spacing between the resonator material and the bias material arranged in a stacked configuration; and partially de-gaussing the bias material subsequent to being fully saturated.

Notably, the security tags and detachers (or external tools) of the present invention can be used in a variety of applications. For example, the present invention can be used in an EAS system for detecting the unauthorized removal of articles from a particular area or space. EAS systems are well known in the art, and therefore will not be described herein.

### EAS System

Referring now to FIGS. 1-6, there is provided schematic illustrations useful for understanding an exemplary EAS system **100** in accordance with the present invention. The EAS system **100** comprises a monitoring system **106-112, 114-118** and at least one marker **102.** The marker **102** may be attached to an article to be protected from unauthorized removal from a business facility (e.g., a retail store). The monitoring system comprises a transmitter circuit **112,** a synchronization circuit **114,** a receiver circuit **116** and an alarm **118.**

During operation, the monitoring system **106-112, 114-118** establishes a surveillance zone in which the presence of the marker **102** can be detected. The surveillance zone is usually established at an access point for the controlled area (e.g., adjacent to a retail store entrance and/or exit). If an article enters the surveillance zone with an active marker **102,** then an alarm may be triggered to indicate possible unauthorized removal thereof from the controlled area. In contrast, if an article is authorized for removal from the controlled area, then the marker **102** can be deactivated and/or detached therefrom. Consequently, the article can be carried through the surveillance zone without being detected by the monitoring system and/or without triggering the alarm **118.**

The operations of the monitoring system will now be described in more detail. The transmitter circuit **112** is coupled to the antenna **106.** The antenna **106** emits Radio Frequency ("RF") bursts at a predetermined frequency (e.g., 58 KHz) and a repetition rate (e.g., 60 Hz), with a pause between successive bursts. In some scenarios, each RF burst has a duration of about 1.6 ms. The transmitter circuit **112** is controlled to emit the aforementioned RF bursts by the synchronization circuit **114,** which also controls the receiver circuit **116.** The receiver circuit **116** is coupled to the antenna **108.** The antenna **106, 108** comprises close-coupled pick up coils of N turns (e.g., 100 turns), where N is any number.

When the marker **102** resides between the antennas **106, 108,** the RF bursts transmitted from the transmitter **112, 108** cause a signal to be generated by the marker **102.** In this regard, the marker **102** comprises a resonator **110** and a bias element **104** disposed in a housing **126.** The RF bursts emitted from the transmitter **112, 108** drive the resonator **110** to oscillate at a resonant frequency (e.g., 58 KHz). As a result, a signal is produced with an amplitude that decays exponentially over time.

The synchronization circuit **114** controls activation and deactivation of the receiver circuit **116.** When the receiver circuit **116** is activated, it detects signals at the predetermined frequency (e.g., 58 KHz) within first and second detection windows. In the case that an RF burst has a duration of about 1.6 ms, the first detection window will have a duration of about 1.7 ms which begins at approximately 0.4 ms after the end of the RF burst. During the first detection window, the receiver circuit **116** integrates any signal at the predetermined frequency which is present. In order to produce an integration result in the first detection window which can be readily compared with the integrated signal from the second detection window, the signal emitted by the marker **102** should have a relatively high amplitude (e.g., greater than or equal to about 1.5 nWb).

After signal detection in the first detection window, the synchronization circuit **114** deactivates the receiver circuit **116,** and then re-activates the receiver circuit **116** during the second detection window which begins at approximately 6 ms after the end of the aforementioned RF burst. During the second detection window, the receiver circuit **116** again looks for a signal having a suitable amplitude at the predetermined frequency (e.g., 58 kHz). Since it is known that a signal emanating from the marker **102** will have a decaying amplitude, the receiver circuit **116** compares the amplitude of any signal detected at the predetermined frequency during the second detection window with the amplitude of the signal detected during the first detection window. If the amplitude differential is consistent with that of an exponentially decaying signal, it is assumed that the signal did, in fact, emanate from a marker between antennas **106, 108.** In this case, the receiver circuit **116** issues an alarm **118.**

### Resonator and Bias Elements

The amplitude of the marker **102** is at least partially a result from the materials used to form the resonator **110** and the bias element **104.** The resonator **110** can be formed of any suitable resonator material. An exemplary suitable resonator material is made from Fe, Co and Ni as main elements. Thus, the resonator material can have a chemical composition of FeₐCo_{b}Ni_{c}Si_{d}Bₑ, wherein a, b, c, d and e are in atomic percent. The values of a-e can respectively fall within the following ranges: 22 ≤ a ≤ 36; 10 ≤ b ≤ 13; 43 ≤ c ≤ 49; 1 ≤ d ≤4; and 15 ≤ e ≤ 17. For example, the resonator material may have a chemical composition Fe₂₄Co₁₂Ni₄₆Si₂B₁₆. The atomic percentages for Fe, Co and Ni may vary approximately ± 5% from the stated values for atomic percent.

The resonator material may be rapidly quenched and annealed prior to assembly of the marker **102.** The manner in which the resonator material is quenched can be the same as or similar to that disclosed in U.S. Patent Nos. 4,142,571 ("the '571 patent") and 7,088,246 ("the '246 patent), the disclosures of which are incorporated herein by reference. The manner in which the resonator material is annealed can be the same as or similar to that disclosed in U.S. Patent No. 6,645,314 ("the '314 patent"), the disclosure of which is incorporated herein by reference.

For example, in some scenarios, the resonator material is annealed (subsequent to rapid quenching) at a temperature between 340°C and 400°C for a few seconds (e.g., 5-30 sec.) under a tensile force. The tensile force is used to control the material's amplitude. In turn, the material's amplitude is controlled such that it reaches its maximum value at a bias field **H_{MAX}** (e.g., 7.7 Oe or 6.5 Oe). To reduce the value of the bias field **H_{MAX},** a relatively low tensile force (e.g., 10-20 N) is employed during annealing.

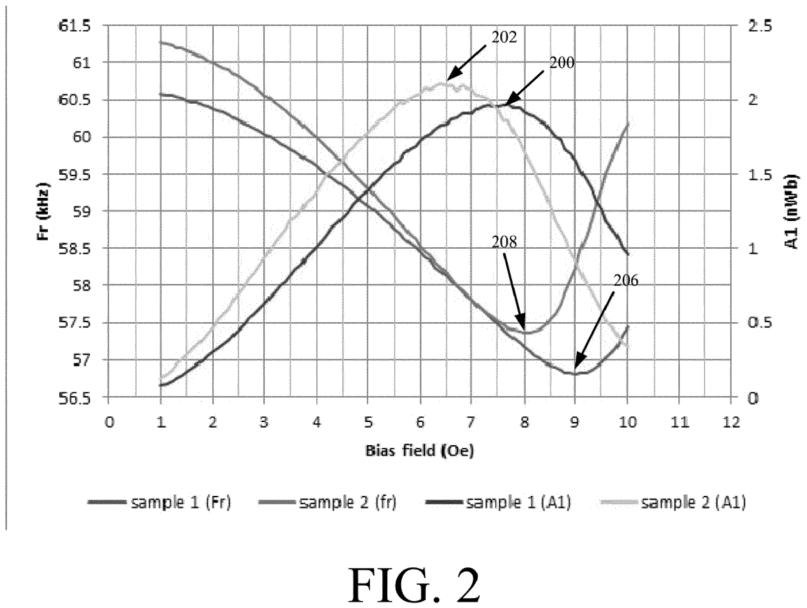

FIG. 2 shows bias sweep curves for two samples with the same chemical composition, but annealed with different conditions. As shown in FIG. 2, the bias field value **H_{MAX}** for a first sample equals 7.7 Oe (as shown by reference number **200**) and the anisotropy field Hₖ is 9 Oe (as shown by reference number **206**)**.** The bias field value **H_{MAX}** for a second sample equals 6.5 Oe (as shown by reference number **200**) and the anisotropy field Hₖ is 8 Oe (as shown by reference number **208**). The reduction of the bias field value **H_{MAX}** for the second sample enables a corresponding marker to operate at a low bias field (e.g., 6.5 Oe), whereby magnetic clamping is relieved. As a result, the maximum resonant amplitude of the signal emitted from the corresponding marker is increased as compared to that of a marker comprising the first sample material (e.g., from about 1.0 nWb to about 1.5 nWb).

The bias field value **H**_{operating} is further reduced when the marker **102** is assembled and/or magnetized. To further reduce the bias field value **H**_{operating}, the geometry of the bias element **104** can be modified and/or the distance between components **104, 110** can be increased. The same purpose is achieved by applying a reverse Direct Magnetic ("DM") field to partially de-Gauss a fully saturated bias material. Each of the listed techniques for further reducing the bias field value **H**_{operating} will be described in detail below.

As shown in FIGS. 1, 3 and 4, the bias element **104** has a generally rectangular shape. Thus, its geometry can be modified by decreasing its width **302** and/or its thickness **402.** In conventional EAS systems, the bias element of a marker has a width of about 6 mm and a thickness of about 48 microns. In contrast, the geometry of the bias element **104** may be modified such that it has a width **302** of less than 6 mm (e.g., about 5 mm) and/or a thickness **402** less than 48 microns (e.g., about 40 microns). Such geometry modifications of the bias element **104** may result in a decrease of the marker's operating bias field **H**_{operating} from e.g., 6.5 Oe to e.g., 5.5 Oe.

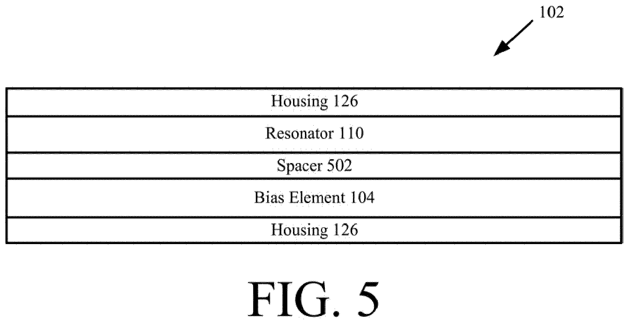

As shown in FIG. 5, the marker **102** comprises a plurality of material layers defining components **104, 110, 126, 502.** The resonator **110** and bias element **104** reside between two housing **126** layers. The bias element **104** is disposed below the resonator **110** in a stacked arrangement. A spacer **502** may optionally be provided between the resonator **110** and bias element **104.** The spacer **502** is formed of any suitable material, such as plastic. The thickness of the spacer **502** is selected to further decrease the marker's operating bias field **H_{operating}** from e.g., 6.5 Oe to e.g., 5.5 Oe. In conventional systems, the spacer has a thickness of 10 mils. In contrast, the spacer **502** of the present invention can have a thickness greater than 10 mils if it is desirable to obtain a lower operating bias field **H_{operating}.**

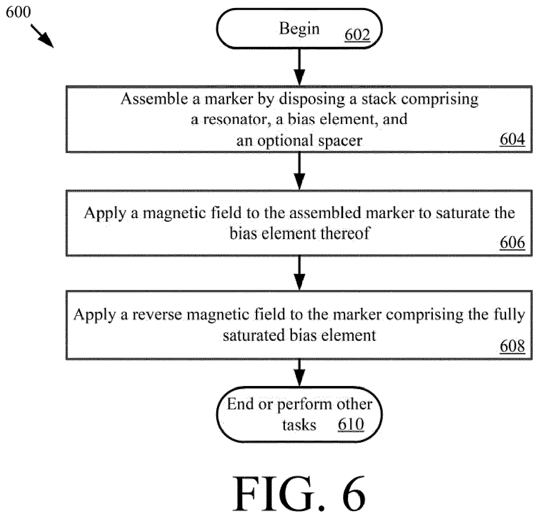

As noted above, the operating bias field **H_{operating}** can be further reduced through an application of a reverse DM field to a fully saturated bias element. An exemplary method 600 is shown in FIG. 6 that is useful for understanding this feature of the present invention. As shown in FIG. 6, the method **600** begins with step **602** and continues with step **604.** In step **604,** a marker (e.g., marker **102** of FIG. 1) is assembled. Such assembly involves disposing a stack in a housing (e.g., housing **126** of FIG. 1). The stack comprises a resonator (e.g., resonator **110** of FIG. 1), and an optional spacer (e.g., spacer **502** of FIG. 5).

Once the marker has been fully assembled, a magnetic field is applied thereto for purposes of saturating the bias element material, as shown by step **606.** Techniques for saturating a bias element material are well known in the art, and therefore will not be described herein. Next in step **608,** a reverse DM field is applied to the marker with the fully saturated bias element material. Techniques for applying a reverse DM field to an object are well known in the art, and any known method can be used herein without limitation. For example, the reverse DM field can be applied using a coil or a magnet in a direction that is the reverse of the direction in which the magnetic field was previously applied to saturate the bias material. Upon completing step **608,** step **610** is performed where method **600** ends or other tasks are performed.

The following Table 1 shows test results of tests performed using the second sample referred to above in relation to FIG. 2 to further reduce a bias field strength of a marker in accordance with the various techniques described above.

| Configuration | | Amplitude (nWb) | Frequency (kHz) | Q | Notes |
|---|---|---|---|---|---|
| Bias Width | Spacer | | | | |
| 5 mm | 0 mm | 1.52 | 58.589 | 405 | |
| 6 mm | 0 mm | 1.08 | 58.684 | 399 | Conventional Label Design |
| 6 mm | 0 mm | 1.50 | 58.113 | 347 | 10 Oe DC de-gaussed |
| 6 mm | 0.19 mm | 1.46 | 58.276 | 358 | Paper spacer between bias element and resonator |
| 6 mm | 0.39 mm | 1.62 | 58.356 | 392 | |

As shown in Table 1, the signal amplitude increases by about 50% (e.g., changes from 1.08 nWb to > 1.46 nWb) in other design formats as the operating bias field **H_{operating}** is reduced. In addition to or alternative to the above described techniques for reducing the operating bias field **H_{operating},** multiple resonators may be disposed in a marker whereby the signal amplitude is increased.

### Marker Housing

The marker is shown in FIG. 1 as having a particular housing architecture. Embodiments of the present invention are not limited to the housing architecture shown in FIG. 1. As such, additional alternative housing architectures will now be discussed which can be used with the present invention without limitation.

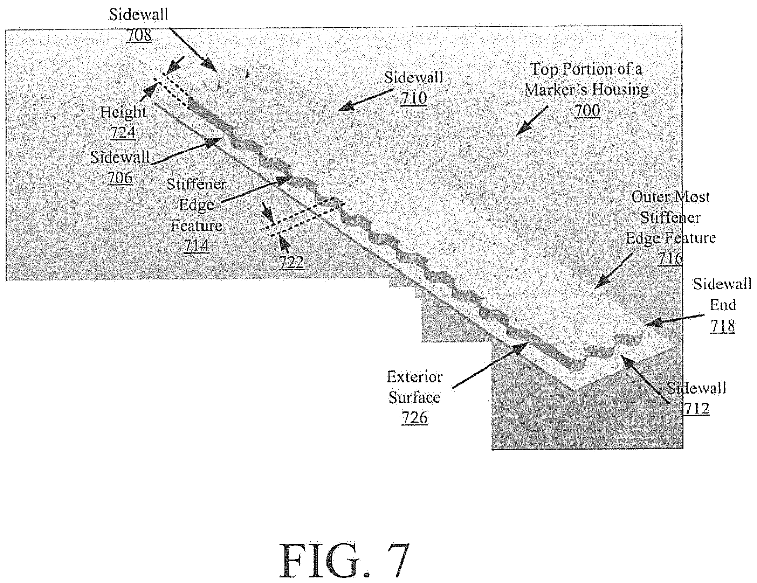

Notably, each of the additional alternative housing architectures comprise stiffener edge features (e.g., ribs, protrusions and/or dimples) that stiffen the marker considerably from previous marker designs, such as that discussed above in the background section of this paper. The new marker design greatly improves the rigidity of the plastic and significantly improves the label performance both under crush conditions and bending conditions. In addition, the yield in the factory improves because the markers remain flat after forming. Previously, a few percent of the markers were "dead" (non-performing) due to warping in the cavity (e.g., cavity **702** of FIG. 7) during manufacturing. Furthermore, the stiffener edge features allow the housing thickness to be reduced as compared to that of conventional marker housings, thereby reducing the manufacturing costs of the markers without having any decreased performance thereof. The stiffener edge features facilitate improved performance of the markers via an increase in their signal's amplitude.

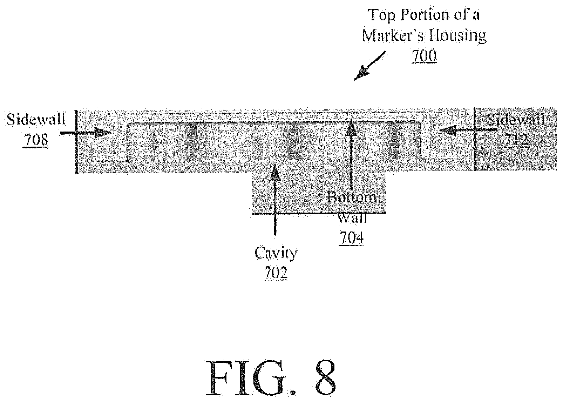

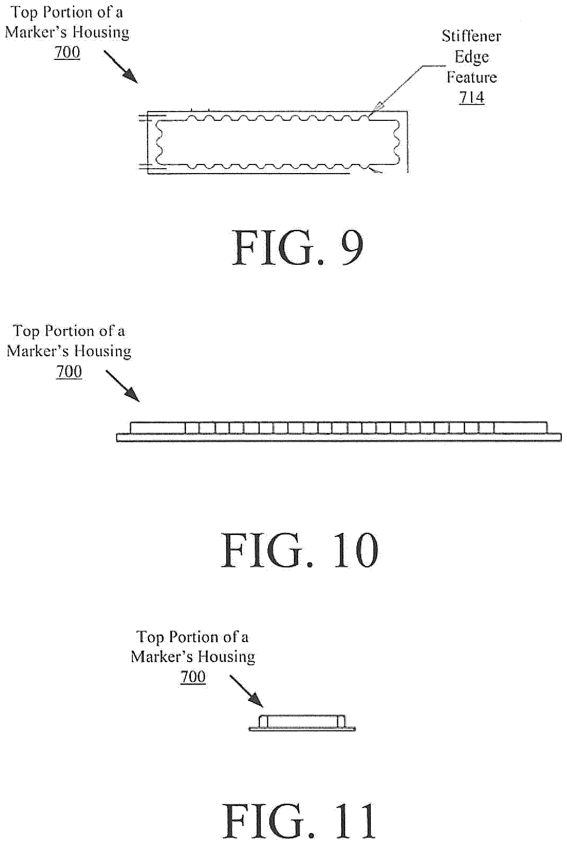

Referring now to FIGS. 7-11, there is provided various schematic illustrations of an exemplary architecture for a top portion **700** of a marker's housing. More particularly, FIG. 7 provides a perspective view of the top portion **700.** A cross-sectional view of the top portion **700** is provided in FIG. 8. A top view of the top portion **700** is provided in FIG. 9. A side view of the top portion **700** is provided in FIG. 10. A front view of the top portion **700** is provided in FIG. 11.

Notably, the bottom portion (not shown) of the marker's housing is generally a flat panel which is coupled to the top portion **700** at least along the entire peripheral edge thereof (e.g., via an adhesive or heat weld). The top and bottom portions of the marker housing are formed of a flexible material, such as plastic (e.g., polystyrene). A single sheet of flexible material can be used to form top portions and/or bottom portions for a number of marker housings (e.g., 20 marker housings). With regard to the top portion **700,** the single sheet of the flexible material is shaped through the application of heat and/or pressure thereto so as to cause the sheet to conform to the shape of a mold. The mold may be designed such that: a number of top portions **700** are fabricated at the same time from a single sheet of housing material; and various elements of the top portion are formed concurrently with each other (e.g., a cavity and a plurality of stiffener edge features).

As shown in FIG. 7, the top portion **700** has a generally rectangular shape with a cavity **702** formed therein. The cavity **702** is sized and shaped to receive the resonator and bias elements described above. When the top and bottom portions of a marker's housing are coupled together, the resonator and bias elements are said to be housed in the marker's housing.

As also shown in FIG. 7, a bottom wall **704** of the cavity is flat or planar. In contrast, each of the four sidewalls **706-712** has a non-planar shape. More particularly, each short sidewall **708, 712** has a generally serpentine shape. Each elongate sidewall **706, 710** has a non-planar shape defined by at least one stiffener edge feature **714** formed therein (or along an exterior surface **726** thereof). The stiffener edge features **714** serve to strengthen the marker housing by increasing the crush resistance and bend resistance of the elongate sidewalls **706, 710.** As such, each stiffener edge feature **714** extends a certain percentage of the height **724** of the respective sidewall **706-712** (e.g., 50-100%). Each stiffener edge feature may be a hollow or solid structure. In addition, the overall thickness of the marker housing is reduced. In effect, the cost associated with fabricating the marker housing is also reduced without any performance degradation of the marker.

In this regard, each stiffener edge feature **714** comprises a protrusion/rib extending in a direction out and away from the housing material, a dimple extending in a direction out and away from the housing material, or a dimple extending in a direction towards the center of the housing. The stiffener edge features on each elongate sidewall **706, 710** can be of the same or different types. For example, the stiffener edge features of sidewalls **706** and **710** can be of the same type as shown in FIG. 7, i.e., convex dimples **714** extending out and away from the housing material. However, the stiffener edge features of sidewalls **706** and **710** can be of two different types although not shown, i.e., convex dimples **714** extending out and away from the housing material and concave dimple extending in and towards the center of the housing. In all scenarios, each stiffener edge feature **714** may have a dome shape as shown in FIG. 7, a square shape, a rectangular shape, a triangular shape or any other shape suitable for providing structural strength to the marker housing.

Any number of stiffener edge features **714** can be provided on each elongate sidewall **706, 710** of the top portion **700.** For example, eleven stiffener edge features **714** are provided on each sidewall **706** and **710.** The present invention is not limited to the particular numbers of stiffener edge features shown in FIG. 7.

The stiffener edge features on each elongate sidewall **706, 710** can have equal spacing therebetween or non-equal spacing therebetween. For example, the spacing between adjacent stiffener edge features **714** of each sidewall **706, 710** is the same for all adjacent pairs of edge features thereof. The spacing between the stiffener edge features of each sidewall can be the same as or different than that of the other sidewalls. For example, the stiffener edge features **714** of sidewall **706** are spaced apart by a particular distance **722** (e.g., approx. 0.1 inches). The spacing between the outer most edge features **716** of each sidewall and the respective sidewall end **718** can be the same or different for each sidewall.

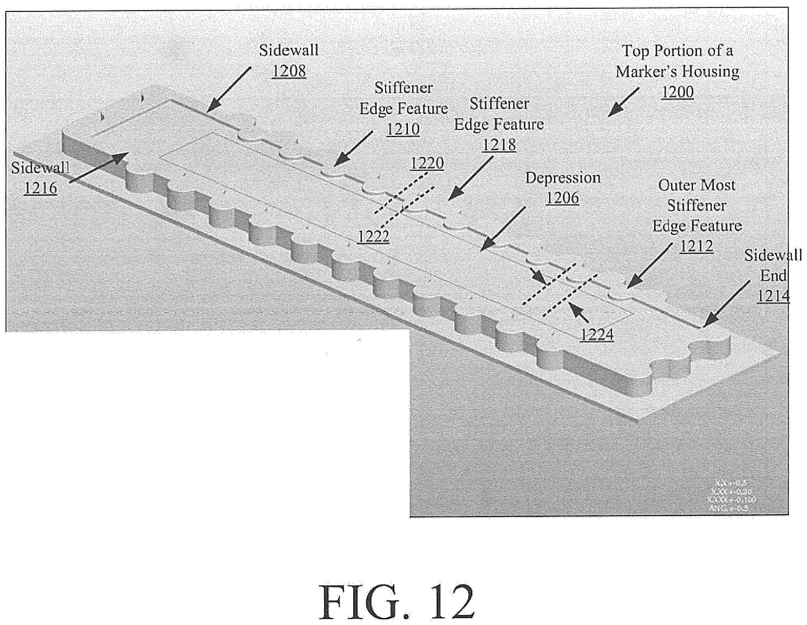

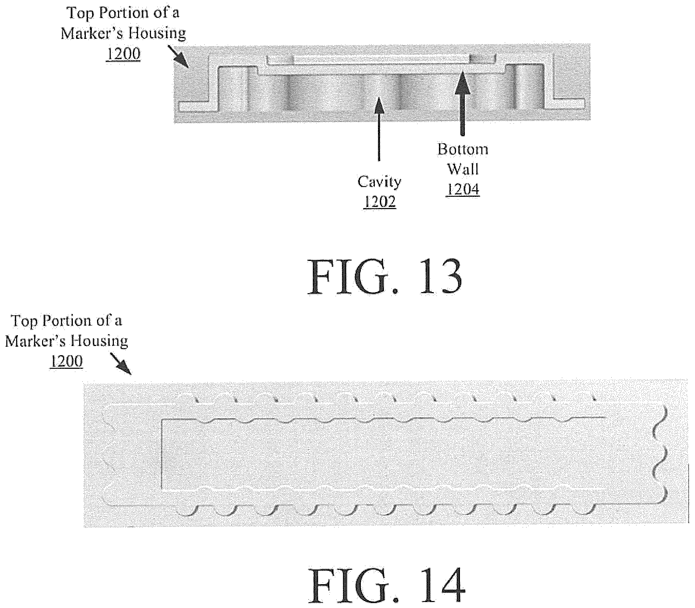

Referring now to FIGS. 12-14, there are various schematic illustrations of another exemplary architecture for a top portion **1200** of a marker's housing. More particularly, FIG. 12 provides a perspective view of the top portion **1200.** FIG. 13 provides a cross sectional view of the top portion **1200.** FIG. 14 provides a top view of the top portion **1200.**

Notably, top portion **1200** is the same as or substantially similar to top portion **700** with a few exceptions which will be described below. As such, the discussion provided above in relation to FIGS. 7-11 is suitable for understanding the general architecture of top portion **1200** (especially the stiffener edge features formed on the elongate sidewalls thereof).

As shown in FIG. 12, the bottom wall **1204** of the cavity **1202** is non-planar as opposed to planar (as shown in FIG. 7). In this regard, the bottom wall **1204** has a depression **1206** formed therein. The depression **1206** can have any shape and/or size selected in accordance with a particular application. For example, the depression **1206** has a generally rectangular shape, and extends into the cavity **1202.**

The two elongate sidewalls **1208, 1216** of the depression **1206** each have stiffener edge features **1210** formed thereon. Each stiffener edge feature **1210** comprises a protrusion, ridge or dimple extending in a direction towards the center of the housing (as shown in FIG. 12). The stiffener edge features on each sidewall **1208, 1216** can be of the same or different types. In all scenarios, each stiffener edge feature **1210** may have a dome shape as shown in FIG. 12, a square shape, a rectangular shape, a triangular shape or any other shape suitable for providing structural strength to the marker housing.

Also, a center axis **1222** of each stiffener edge feature **1210** is offset from a center axis **1220** of adjacent stiffener edge features **1218** such that the stiffener edge features **1210, 1218** have a generally alternating pattern along the length of the respective side of the top portion **1200.** In some cases, the adjacent stiffener edge features **1210** and **1218** do not overlap each other at all. However, in other scenarios, at least a portion of the adjacent stiffener edge features **1210** and **1218** overlap each other (e.g., by no less than 10 % of their overall width **1224**). This offset arrangement allows the spacing between adjacent stiffener edge features **1210** to be the same as or different than the spacing between adjacent stiffener edge features **1218.**

Any number of stiffener edge features **1210** can be provided on each sidewall **1208, 1216** of the depression **1206.** The stiffener edge features **1210** on each sidewall can have equal spacing therebetween or non-equal spacing therebetween. The spacing between the stiffener edge features **210** of each sidewall **1208, 1216** can be the same as or different than that of the other sidewalls. The spacing between the outer most edge features **1212** of each sidewall **1208, 1216** and the respective sidewall end **1214** can be the same or different for each sidewall.

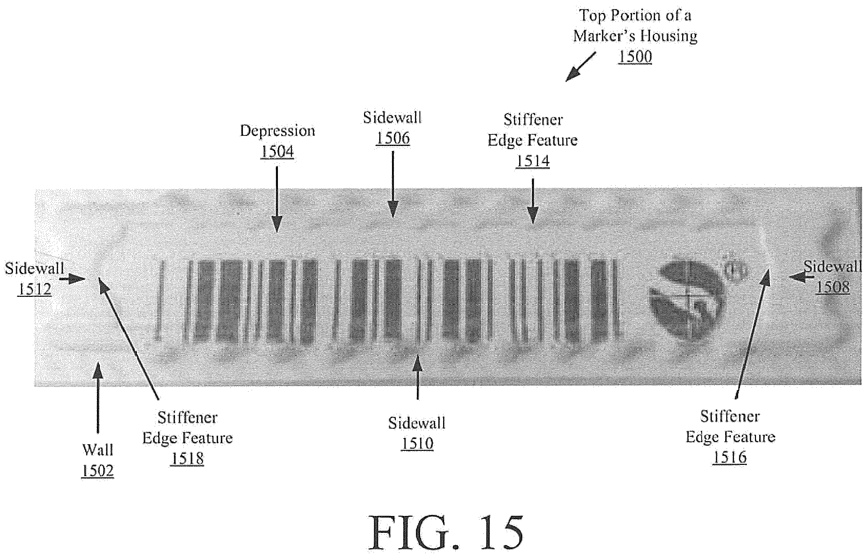

Referring now to FIG. 15, there is provided a schematic illustration of another exemplary architecture for a top portion **1500** of a marker's housing. Top portion **1500** is the same as or substantially similar to top portions **700, 1200** with a few exceptions which will be described below. As such, the discussion provided above in relation to FIGS. 7-14 is suitable for understanding the general architecture of top portion **1500** (especially the stiffener edge features formed on the elongate sidewalls thereof).

As shown in FIG. 15, a wall **1502** of the top portion **1500** is non-planar as opposed to planar (as shown in FIG. 7). In this regard, the wall **1502** has a depression **1504** formed therein. The depression **1504** can have any shape and/or size selected in accordance with a particular application. For example, the depression **1504** has a generally rectangular shape, and extends into the cavity (not shown in FIG. 15).

All four sidewalls **1506-1512** of the depression **1504** have at least one stiffener edge feature **1514, 1516** or **1518** formed thereon. Each stiffener edge feature comprises a protrusion, rib, dimple or indent. The stiffener edge features on each sidewall can be of the same or different types. For example, the stiffener edge features **1514** on sidewalls **1506** and **1510** comprise convex ribs extending in a direction towards the center of the housing. In contrast, the stiffener edge features **1516, 1518** of sidewalls **1508, 1512** comprise indents extending in a direction away from the center of the housing. In all scenarios, each stiffener edge feature may have a dome shape as shown in FIG. 15, a square shape, a rectangular shape, a triangular shape or any other shape suitable for providing structural strength to the marker housing. Some or all of the dome shaped stiffener edge features can have the same or different radii.

Any number of stiffener edge features can be provided on each sidewall **1506-1512** of the depression **1504.** For example, ten stiffener edge features **1514** are provided on each sidewall **1506** and **1510.** In contrast, a single stiffener edge feature **1516** or **1518** is provided an each sidewall **1508** and **1512.** The stiffener edge features on each sidewall can have equal spacing therebetween or non-equal spacing therebetween. The spacing between the stiffener edge features of each sidewall can be the same as or different than that of the other sidewalls. The spacing between the outer most stiffener edge features of each sidewall and the respective sidewall end can be the same or different for each sidewall.

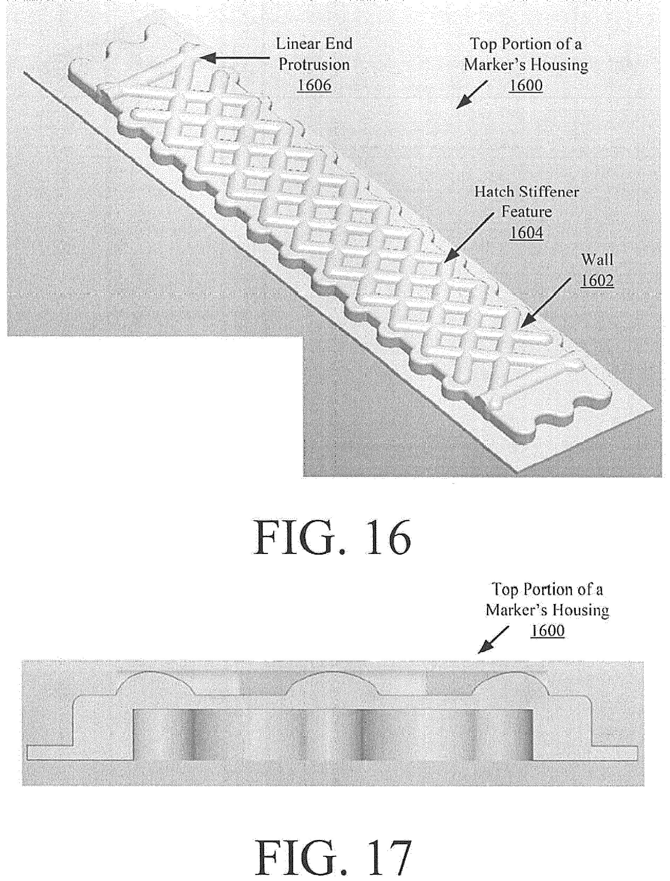

Referring now to FIGS. 16-17, there is provided a schematic illustration of another exemplary architecture for a top portion **1600** of a marker's housing. Top portion **1600** is the same as or substantially similar to top portions **700** with a few exceptions which will be described below. As such, the discussion provided above in relation to FIGS. 7-11 is suitable for understanding the general architecture of top portion **1600** (especially the stiffener edge features formed on the elongate sidewalls thereof).

As shown in FIGS. 16-17, the top portion **1600** includes wall **1602** having a hatch stiffener feature **1604** formed thereon. The hatch stiffener feature **1604** comprises a plurality of linear protrusions which extend out and away from the wall **1602.** The linear protrusions are arranged relative to each other so as to collectively form a woven mesh-like structure. Ends of the woven mesh-like structure may be respectively crossed by linear end protrusions **1606.** The woven mesh-like structure and linear end protrusions **1606** provide additional strength to the wall **1602.**

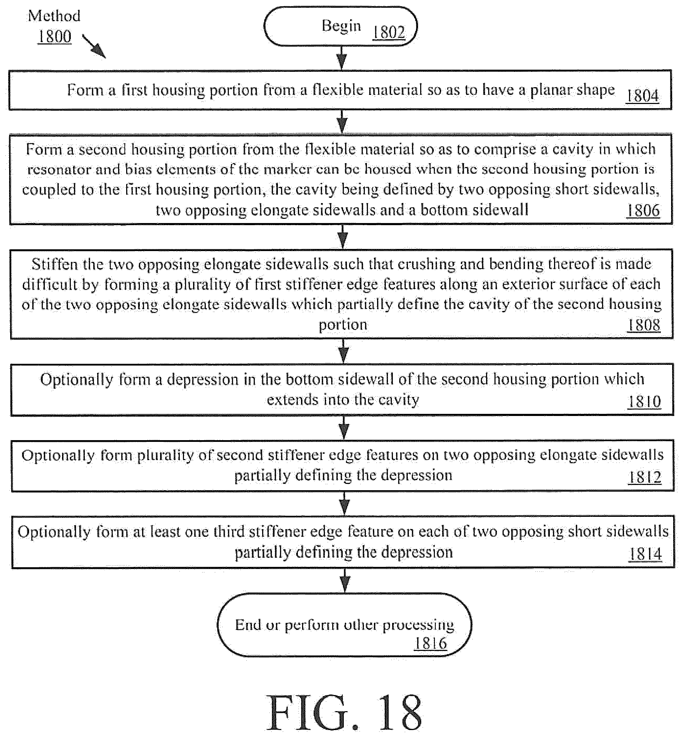

Referring now to FIG. 18, there is provided a flow diagram of an exemplary method **1800** for making a marker housing. Method **1800** begins with step **1802** and continues with step **1804.** Step **1804** involves forming a first housing portion from a flexible material so as to have a planar shape. Next in step **1806,** a second housing portion is formed from the flexible material so as to comprise a cavity in which resonator and bias elements of the marker can be housed when the second housing portion is coupled to the first housing portion. The cavity is defined by two opposing short sidewalls, two opposing elongate sidewalls and a bottom sidewall.

The two opposing elongate sidewalls are stiffened in step **1808** such that crushing and bending thereof is made difficult. The stiffening is achieved by forming a plurality of first stiffener edge features along an exterior surface of each of the two opposing elongate sidewalls which partially define the cavity of the second housing portion. The first edge features are disposed along a respective one of the two opposing elongate sidewalls so as to have equal or non-equal spacing between adjacent ones thereof. Each of the first stiffener edge features may: extend more than 50% of an entire height of a respective one of the two opposing elongate sidewalls of the second housing portion; comprise a shaped hollow or solid structure protruding out and away from the second housing portion; and/or have a dome shape.

After completing step **1808,** method **1800** may continue with one or more optional steps **1810-1814.** In step **1810,** a depression is optionally formed in the bottom wall of the second housing portion which extends into the cavity. A plurality of second stiffener edge features may optionally be formed on two opposing elongate sidewalls partially defining the depression, as shown by step **1812.** In this case, a center axis of one of the first stiffener edge features is offset from a center axis of an adjacent one of the second stiffener edge features. At least one third stiffener edge feature may optionally be formed on each of two opposing short sidewalls partially defining the depression, as shown by step **1814.** Upon completing step **1814,** step **1816** is performed where method **1800** ends or other processing is performed.

Notably, the cavity of the second housing portion, the first stiffener edge features, the depression, the second stiffener edge features and the third stiffener edge feature can be formed concurrently with each other. As such, steps **1806-1814** can be performed simultaneously or concurrently with each other.

All of the apparatus, methods, and algorithms disclosed and claimed herein can be made and executed without undue experimentation in light of the present disclosure. While the invention has been described in terms of preferred embodiments, it will be apparent to those having ordinary skill in the art that variations may be applied to the apparatus, methods and sequence of steps of the method without departing from the concept, spirit and scope of the invention. More specifically, it will be apparent that certain components may be added to, combined with, or substituted for the components described herein while the same or similar results would be achieved. All such similar substitutes and modifications apparent to those having ordinary skill in the art are deemed to be within the spirit, scope and concept of the invention as defined.

The features and functions disclosed above, as well as alternatives, may be combined into many other different systems or applications. Various presently unforeseen or unanticipated alternatives, modifications, variations or improvements may be made by those skilled in the art, each of which is also intended to be encompassed by the disclosed embodiments.

## Claims

1. A method for making a marker, comprising:
obtaining a resonator material which has been annealed under a tensile force selected to provide a bias field Hₘₐₓ in said marker;
disposing the resonator material and bias material in a stacked arrangement within a housing to form said marker;
applying a magnetic field to said marker to saturate the bias material; and
applying a reverse DC field to said marker to further reduce said value of said operating bias field H_{operating} in said marker.

2. The method according to claim 1, further comprising selectively modifying a geometry of a bias material such that a value of an operating bias field H_{operating} in said marker is reduced.

3. The method according to claim 1, further comprising selectively modifying a spacing between said resonator material and said bias material arranged in a stack.

4. A marker, comprising:
a housing;
a resonator material disposed in said housing which has been annealed under a tensile force selected to provide a maximum resonant amplitude at a bias field Hₘₐₓ in said marker; and
a bias material disposed in said housing in a stacked arrangement with said resonator material;
wherein a magnetic field has been applied to said marker to saturate the bias material, and a reverse DC field has been applied to said marker to reduce a value of an operating bias field H_{operating} in said marker as compared to said bias field Hₘₐₓ.
